Europäisches Patentamt

European Patent Office

Office européen des brevets

(19)

(11) EP 0 703 468 B1

(12) **FASCICULE DE BREVET EUROPEEN**

(45) Date de publication et mention
de la délivrance du brevet:
**20.03.2002 Bulletin 2002/12**

(51) Int Cl.⁷: **G01S 17/58**, G01S 17/95

(21) Numéro de dépôt: **95402119.2**

(22) Date de dépôt: **20.09.1995**

(54) **Procédé et système de détermination des paramètres anémobaroclinométriques à bord d'un aéronef**

Verfahren und Vorrichtung zum Bestimmen von anemometrischen, barometrischen und Neigungs-Parametern für Luftfahrzeuge

Method and system for the determination of anemometric, barometric and clinometric parameters on board an aircraft

(84) Etats contractants désignés:
**DE GB**

(30) Priorité: **22.09.1994 FR 9411309**

(43) Date de publication de la demande:
**27.03.1996 Bulletin 1996/13**

(73) Titulaire: **SEXTANT AVIONIQUE S.A.**
**92366 Meudon la Forêt Cédex (FR)**

(72) Inventeur: **Morbieu, Bertrand**
**F-33200 Bordeaux (FR)**

(74) Mandataire: **Geismar, Thierry et al**
**Bouju Derambure Bugnion,**
**52, rue de Monceau**
**75008 Paris (FR)**

(56) Documents cités:
**GB-A- 2 123 240          US-A- 5 055 692**

• **OPTICAL ENGINEERING, vol. 31, no. 8, Août 1992 BELLINGHAM US, pages 11701-1704, XP 000296159 CHUNYONG YIN ET AL. 'four-beam two-focus differential laser velocimetry system'**

**Description**

La présente invention concerne un procédé et un système de détermination des paramètres anémobaroclinométriques à bord d'un aéronef.

L'anémométrie actuelle à bord des aéronefs repose sur la mesure de paramètres relatifs à l'air tel que la pression statique, la pression totale et la température d'impact à l'aide de sondes et de capteurs.

Les sondes sont des dispositifs protubérants sur la peau de l'avion qui présentent en conséquence un certain nombre d'inconvénients.

Du point de vue aérodynamique, les sondes perturbent l'écoulement d'air et peuvent constituer une gêne pour les entrées d'air des moteurs. Elles augmentent en outre la trainée.

Du point de vue électromagnétique, elles génèrent une signature radar nuisant à la furtivité de l'avion et nécessitent un dégivrage qui nuit à la discrétion infrarouge et consomme de l'énergie.

Par ailleurs les mesures sont effectuées localement dans des zones aérodynamiquement pertubées et nécessitent donc des corrections importantes qui sont modélisées lors des essais en vol, mais ne donnent pas toute la précision souhaitable dans tous le domaine de vol (par exemple en post-décrochage).

Malgré une bonne précision de mesure des capteurs, la performance de la fonction anémobaroclinométrique est détériorée par les phénomènes de non reproductibilité et d'usure des sondes et trouve une limite dans les résidus d'erreur de modélisation.

L'augmentation des contraintes opérationnelles de furtivité et de manoeuvrabilité pousse l'anémométrie actuelle à ses limites. Si l'on veut éliminer la protubérance des sondes pour satisfaire aux contraintes de furtivité, la complexité de modélisation devient alors d'autant plus délicate que l'on demande à l'avion d'être manoeuvrant.

La présente invention vise à pallier ces inconvénients.

A cet effet, l'invention a tout d'abord pour objet un procédé de détermination des paramètres anémobaroclinométriques à bord d'un aéronef, caractérisé par le fait que l'on mesure :

- le vecteur vitesse air (Vp) ;
- la pression statique (Ps) ;
- la température d'impact (Ti) ; et

que l'on calcule à partir des mesures précitées le nombre de Mach (M) et au moins un paramètre choisi parmi :

- la température statique (Ts) ;
- la masse volumique (p) ;
- l'altitude pression (Zp) ;
- la pression totale (Pt) ; et
- la vitesse conventionnelle (Vc).

On verra en effet ci-après que tous les paramètres peuvent être obtenus à partir des trois paramètres mesurés précités.

Le choix de ces trois paramètres présente l'avantage qu'ils peuvent être obtenus par des sondes non protubérantes.

En particulier, le vecteur vitesse air peut être mesuré par anémométrie laser longitudinale.

L'anémométrie Doppler longitudinale procède par mesure du décalage Doppler $\Delta f$ que subit une onde lumineuse monochromatique de longueur d'onde $\lambda$ lorsqu'elle est rétrodiffusée par les aérosols en suspension dans l'atmosphère. Ce décalage vaut $\Delta f = 2V/\lambda$ ou V désigne la composante du vecteur vitesse air suivant l'axe de visée.

La mesure du décalage Doppler conduit donc à la composante du vecteur vitesse air par l'intermédiaire d'une loi rigoureusement linéaire dans le domaine de vitesse considéré, et dont le facteur d'échelle ne dépend que de la longueur d'onde du laser qui est en général connue avec une grande précision et n'évolue pas dans le temps. A la longueur d'onde de 2 $\mu$m,le facteur d'échelle est d'environ de 1 MHz par m/s.

La mesure est effectuée à plusieurs dizaines de mètres (50 à 100 mètres) en amont de l'aéronef en une zone non perturbée à l'intérieur d'un volume de mesure dont la longueur typique est de l'ordre de la dizaine de mètre.

Les trois composantes du vecteur vitesse air vrai peuvent être obtenues grâce à plusieurs axes de visée. Les zones de mesure sur les différents axes sont alors disjointes mais leur distance est inférieure à l'échelle de turbulence atmosphérique.

Bien que l'anémométrie Doppler longitudinale présente l'avantage de mesurer la vitesse air dans une zone aérodynamique non perturbée, il est possible d'utiliser d'autres procédés optiques n'utilisant pas de sonde protubérante.

C'est ainsi que l'on pourrait utiliser un anémomètre laser à franges ou un anémomètre dit "bi-nappes" ou "à temps de vol".

Il est théoriquement possible de ne mesurer les modules des projections du vecteur vitesse que sur trois axes de mesure, mais on adopte de préférence une mesure redondante sur quatre axes.

Si l'on effectue en outre une mesure de type classique du vecteur vitesse sol, on peut en déduire le vecteur vent puisque l'on connait le vecteur vitesse air.

La connaissance du vecteur vent présente ainsi un intérêt particulier. Il est en effet possible, entre deux déterminations successives du vecteur vitesse air vrai, de déterminer un vecteur vitesse air calculé à partir du vecteur vitesse sol et du dernier vecteur vent obtenu.

La présente invention a également pour objet un système anémobaroclinométrique pour la mise en oeuvre du procédé décrit ci-dessus, caractérisé par le fait qu'il comprend au moins un moyen de mesure du vecteur vitesse air (Vp) au moins un moyen de mesure de pression statique (Ps), au moins un moyen de mesure de la température d'impact (Ti), et au moins un calculateur agencé pour calculer les autres paramètres anémobaroclinométriques à partir de la vitesse air, de la pression statique et de la température d'impact.

Dans un mode de réalisation préféré, les moyens de mesure de la vitesse air comprennent deux anémomètres laser longidudinaux à quatre axes de mesure.

Avantageusement on prévoit trois calculateurs recevant chacun les huit mesures de projection de vitesse, au moins une mesure de pression statique et au moins une mesure de température d'impact.

On décrira maintenant à titre d'exemple non limitatif un mode de réalisation particulier de l'invention en référence aux dessins annexés dans lesquels :

- la figure 1 illustre l'architecture du système selon l'invention, et

- la figure 2 est un schéma des étapes du procédé selon l'invention.

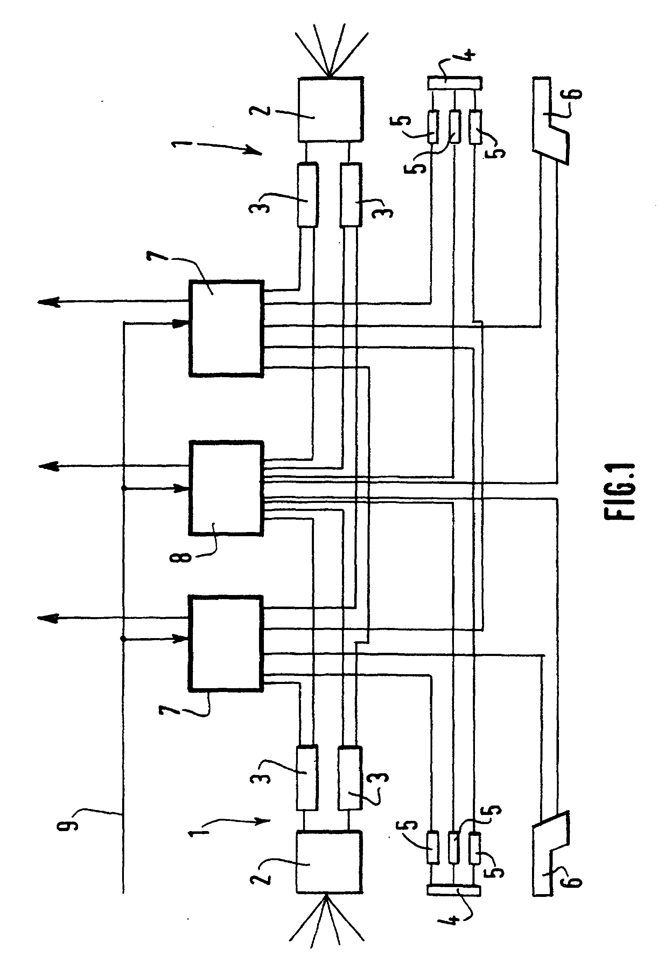

Le système représenté à la figure 1 comporte deux anémomètres laser 1 à quatre axes de mesure. Chaque anémomètre laser comprend un laser, une tête 4 axes 2 pour laquelle les faisceaux sont commutés deux à deux et deux sous-ensembles de traitement d'axe 3 (calcul des projections du vecteur vitesse). Les principes de l'anémomètrie Doppler longitudinale étant connu en eux-mêmes, les anémomètres 1 ne seront pas décrits plus en détail.

Le système comporte par ailleurs deux prises 4 de pression statique à trois orifices de pression associés chacun à un capteur 5.

Enfin deux sondes de température d'impact 6 sont disposées dans les entrées d'air du moteur et sont donc masquées, chaque sonde de température comportant deux éléments de mesure.

Deux calcultateurs 7 reçoivent chacun huit projections de vitesse correspondant à deux anémomètres laser, une mesure de température d'impact et deux mesures de pression statique, l'une correspondant au côté droit et l'autre au côté gauche de l'aéronef. En mode nominal, ces calculateurs 7 fournissent chacun un ensemble de paramètres air avec une indication de l'intégrité de la mesure du vecteur vitesse air.

Un calculateur de secour 8 élabore les mêmes paramètres à partir des 8 projections de vitesse air, de deux mesures de pression statique et de deux mesures de température d'impact.

Les trois calculateurs 7 et 8 reçoivent par ailleurs en 9 les informations nécessaires à l'élaboration de la vitesse sol. Ces informations peuvent provenir de tout moyen connu tel que centrale inertielle, équipement de navigation satellite (GPS), ou radar Doppler.

Les calculateurs 7 et 8 déterminent les paramètres anémobaroclinométriques de la manière suivante.

La pression statique mesurée Psm l'est localement, c'est-à-dire qu'elle ne correspond à la mesure infini amont qu'à la condition d'appliquer un modèle de correction qui dépend du vecteur vitesse air Vp et de la température statique Ts. Ce modèle de correction, déterminé lors des essais en vol, peut s'écrire sous la forme d'une loi de correction du type

$$Ps = f(\bar{V}p, Ts, Ps.mesurées)$$

La température totale est déduite de la température d'impact Ti à partir d'une loi de correction définie également par les essais en vol

$$Tt = g(\bar{V}p, Ps, Ti)$$

Les deux équations ci-dessus permettent de déduire la pression statique Ps et la température totale Tt à partir des mesures de Vp, Ps mesurées et Ti.

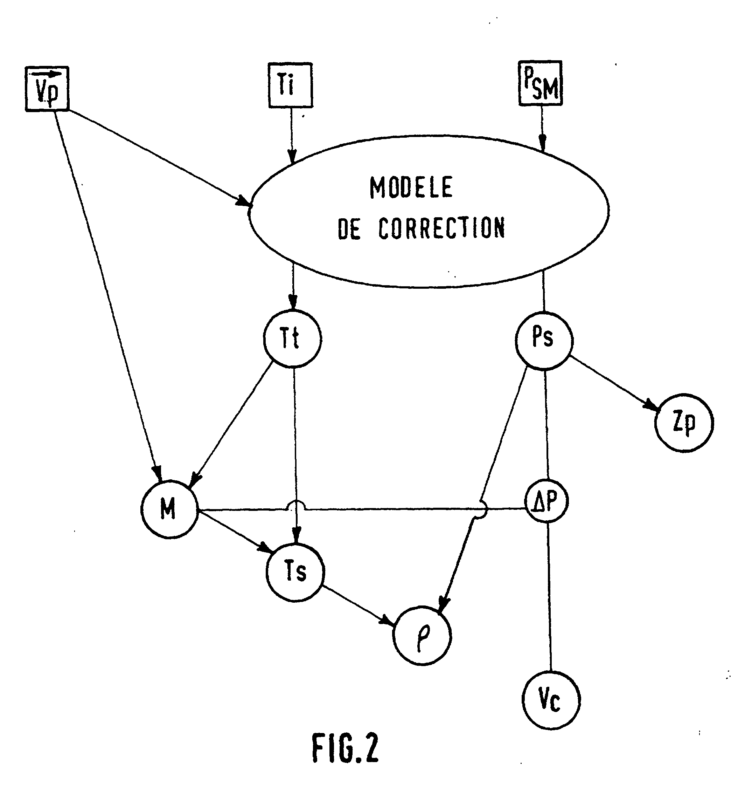

Les autres paramètres sont alors obtenus comme représenté à la figure 2, dans laquelle les carrés correspondent à des mesures et les cercles à des informations de sortie.

Le nombre de Mach est déduit de la vitesse propre air et de la température totale par la relation

$$M = \frac{Vp}{Ko\left[Tt - 0,2\dfrac{Vp^2}{Ko^2}\right]^{1/2}}$$

La température statique est déduite de la température totale et du nombre de Mach par la relation

$$Ts = \frac{Tt}{1+0,2M^2}$$

La masse volumique et l'altitude pression Zp sont déterminés de façon connu à partir de Ps et Ts.

Le calcul de la pression totale est effectué à l'aide du nombre de Mach et de la pression statique suivant les formules de Saint-Venant et Rayleigh

M ≤ 1 : formule de Saint-Venant

$$Pt = Ps(1+0,2M^2)^{3.5}$$

M > 1 : formule de Rayleigh

$$Pt = Ps\frac{(1,2M^2)^{3.5}}{(\dfrac{7M^2-1}{6})^{2.5}}$$

La vitesse conventionnelle se calcule par les relations

$$\Delta p = Pt - Ps$$

$$\Delta p \leq 904,76\,hPa$$

$$Vc = 760,92\left[\left(\frac{\Delta P}{1013,25}+1\right)^{2/7}-1\right]^{1/2}$$

$$\Delta p \geq 904,76\,hPa$$

$$\Delta p = 1013,25\left[\frac{3,1588.10^{-16}.Vc^7}{\left(6,0449.10^{-5}Vc^2-1\right)^{2.5}}-1\right]$$

Le système fonctionne en mode nominal lorsque les informations délivrées par les deux calculateurs principaux 7 sont identiques. Dans ce cas les informations délivrées par le calculateur 8 ne sont pas prises en compte.

Si l'un des calculateurs principaux 7 ne présente pas un vecteur vitesse air intègre, cette information n'est pas retenue et l'on compare les informations délivrées par l'autre calculateur principal 7 aux informations délivrées par le calculateur de secours 8. Le fonctionnement du système est encore nominal s'il y a au moins un vitesse vecteur air intègre, un résultat de pression statique commun à deux calculateurs, et un résultat de température d'impact commun à deux calculateurs.

Dans les autres cas, l'intégrité du système n'est pas garantie et le pilotage de l'aéronef se fait en mode dégradé.

Les informations fournies par l'entrée 9 permettent une hybridation reposant sur le fait qu'à cours terme (quelques secondes) le vent local a une valeur constante et qu'il est possible d'estimer les vecteurs vitesse air vrais à un instant to + τ à partir d'une mesure de vitesse air à l'instant to et d'une mesure de vitesse sol.

Il est alors possible de fournir des estimations du vecteur vitesse air entre deux mesures, ce qui contribue à une augmentation de la bande passante de l'information vitesse air.

## Revendications

1. Procédé de détermination des paramètres anémobaroclinométriques à bord d'un aéronef, **caractérisé par le fait que** l'on mesure :

   - le vecteur vitesse air (Vp) ;
   - la pression statique (Ps) ;
   - la température d'impact (Ti) ; et

   que l'on calcule à partir des mesures précitées le nombre de Mach (M) et au moins un paramètre choisi parmi :

   - la température statique (Ts) ;
   - la masse volumique (p) ;
   - l'altitude pression (Zp) ;
   - la pression totale (Pt) ; et
   - la vitesse conventionnelle (Vc).

2. Procédé selon la revendication 1, dans lequel le vecteur vitesse air est mesuré par anémométrie Doppler longitudinale.

3. Procédé selon la revendication 2, dans lequel on mesure les modules des projections du vecteur vitesse sur quatre axes de mesure.

4. Procédé selon l'une quelconque des revendications 1 à 3, dans lequel on mesure en outre le vecteur vitesse sol, et on en déduit le vecteur vent.

5. Procédé selon la revendication 4, dans lequel, entre deux déterminations successives du vecteur vitesse air vrai, on détermine un vecteur vitesse air calcule, à partir du vecteur vitesse sol et du dernier vecteur vent obtenu.

6. Système anémobaroclinométrique pour la mise en oeuvre du procédé selon l'une quelconque des revendications 1 à 5, **caractérisé par le fait qu'**il comprend au moins un moyen (1) de mesure du vecteur vitesse air (Vp), au moins un moyen (4) de mesure de la pression statique (Ps), au moins un moyen (6) de mesure de la température d'impact (TI), et au moins un calculateur (7) agencé pour calculer les autres paramètres anémobaroclinométriques à partir de la vitesse air, de la pression statique et de la température d'impact.

7. Système selon la revendication 6, dans lequel les moyens de mesure de la vitesse air comprennent deux anémomètres laser longitudinaux à quatre axes de mesure.

8. Système selon la revendication 7, comportant trois calculateurs recevant chacun les huit mesures de projection de vitesse, au moins une mesure de pression statique et au moins une mesure de température d'impact.

## Patentansprüche

1. Bestimmungsverfahren von anemobaroklinometrischen Parametern an Bord eines Luftfahrzeugs, **dadurch ge-**

**kennzeichnet, dass** man misst:

- den Luftgeschwindigkeitsvektor (Vp) ;

- den statischen Druck (Ps);

- die Aufschlagtemperatur (Ti); und

dass man ausgehend von den o.g. Messungen die Mach-Zahl (M) und mindestens einer der folgenden Parameter berechnet:

- die statische Temperatur (Ts);

- die Dichte (p) ;

- die Druckhöhe (Zp);

- den Gesamtdruck (Pt); und

- die Eigengeschwindigkeit (Vc).

2. Verfahren nach Anspruch 1, bei dem der Luftgeschwindigkeitsvektor per Doppler-Längsanemometrie gemessen wird.

3. Verfahren nach Anspruch 2, bei dem man die Projektionsmodule des Geschwindigkeitsvektors auf vier Messachsen misst.

4. Verfahren nach einem der Ansprüche 1 bis 3, bei dem man ferner den Bodengeschwindigkeitsvektor misst und davon den Windvektor ableitet.

5. Verfahren nach Anspruch 4, bei dem man zwischen zwei aufeinanderfolgenden Bestimmungen des wirklichen Luftgeschwindigkeitsvektors ab dem Bodengeschwindigkeitsvektor und dem zuletzt erhaltenen Windvektor einen errechneten Luftgeschwindigkeitsvektor bestimmt.

6. Anemobaroklinometrisches System für die Umsetzung des Verfahrens nach einem der Ansprüche 1 bis 5, **dadurch gekennzeichnet, dass** es mindestens ein Messmittel (1) des Luftgeschwindigkeitsvektors (Vp), mindestens ein Messmittel (4) des statischen Drucks (Ps), mindestens ein Messmittel (6) der Aufschlagtemperatur (Ti) und mindestens einen Rechner (7) für die Berechnung der anderen anemobaroklinometrischen Parameter ab der Luftgeschwindigkeit, dem statischen Druck und der Aufschlagtemperatur umfasst.

7. System nach Anspruch 6, bei dem die Messmittel der Luftgeschwindigkeit zwei Laser-Längsanemometer mit vier Messachsen umfassen.

8. System nach Anspruch 7 mit drei Rechnern, die jeweils die acht Projektionsmessungen der Geschwindigkeit, mindestens eine Messung des statischen Drucks und mindestens eine Messung der Aufschlagtemperatur erhalten.

**Claims**

1. A method of determining anemometric, barometric and clinometric parameters on board an aircraft, **characterised by** the fact that:

- the air velocity vector (Vp);

- the static pressure (Ps);

- the impact temperature (Ti);

are measured and in that from the aforementioned measurements there are calculated the Mach number (M) and at least one parameter chosen from amongst:

- the static temperature (Ts);

- the density (p);

- the pressure altitude (Zp);

- the total pressure (Pt); and

- the calibrated speed (Vc).

2.  A method according to Claim 1, in which the air velocity vector is measured by longitudinal Doppler anemometry.

3.  A method according to Claim 2, in which the moduli of the projections of the velocity vector onto four measuring axes are measured.

4.  A method according to any one of Claims 1 to 3, in which in addition the ground velocity vector is measured, and the wind vector is derived therefrom.

5.  A method according to Claim 4, in which, between two successive determinations of the true air velocity vector, a calculated air velocity vector is determined, from the ground velocity vector and the last wind vector obtained.

6.  An anemometric, barometric and clinometric system for implementing the method according to any one of Claims 1 to 5, **characterised by** the fact that it comprises at least one means (1) of measuring the air velocity vector (Vp), at least one means (4) of measuring the static pressure (Ps), at least one means (6) of measuring the impact temperature (Ti) and at least one computer (7) arranged to calculate the other anemometric, barometric and clinometric parameters from the air velocity, the static pressure and the impact temperature.

7.  A system according to Claim 6, in which the means of measuring the air velocity comprise two longitudinal laser anemometers with four measurement axes.

8.  A system according to Claim 7, including three computers each receiving the eight velocity projection measurements, at least one static pressure measurement and at least one impact temperature measurement.

FIG.1

EP 0 703 468 B1

FIG.2